# EUROPEAN PATENT APPLICATION

(11) **EP 0 631 445 A1**
(43) Date of publication of application: **28.12.1994**
(21) Application number: 94304547.6
(22) Date of filing: 22.06.1994
(51) Int. Cl.: H04N 9/31

(54) **Projector device**

(30) Priority: 22.06.1993 JP 174748/93
(71) Applicant: SONY CORPORATION, Tokyo (JP); TEXAS INSTRUMENTS INCORPORATED, Dallas Texas 75265 (US)
(72) Inventor: Iwai, Junichi, c/o Sony Corporation, Shinagawa-ku, Tokyo (JP); Toyama, Hiroyuki, c/o Sony Corporation, Shinagawa-ku, Tokyo (JP)
(74) Representative: Nicholls, Michael John

(57) **Abstract**

In a projector device for displaying a color image on an image displaying surface by projecting the pictures which are composed of one of a red component, a green component, and a blue component of image data on the image displaying surface; a red light, a green light, and a blue light are sequentially emitted on a reflecting surface with a circulative switching scheme, the reflecting surface is composed of a plurality of reflector elements of the reflector means, the reflector elements are arranged in corresponding with pixels of the image data, wherein the reflective directions of each reflector elements are sequentially switched based on the image data in synchronization with the switching of the colors. Thereby, a projector device can be formed with a simple construction, and the whole device can be miniaturized. Furthermore the utilization ratio of the light source can be improved, therefore, a small-size light-weight projector device which is able to display images brighter, can be realized.

## Description

This invention relates to a projector device, and more particularly, is applicable to such devices that project color images.

Heretofore, there is such projector device that displays a red component, a green component, and a blue component of the image data on three CRTs (cathode ray tube) separately.

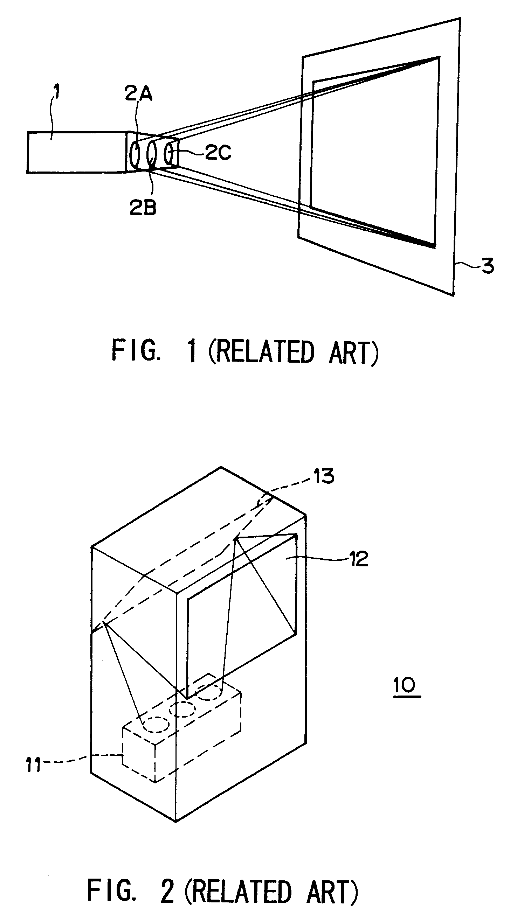

For example, as shown in Fig. 1, in a projection type three-tube projector device 1, three CRTs 2A, 2B, and 2C are linearly arranged side by side on the front of the device. On the side where image projection surfaces of CRTs 2A to 2C reside, a red filter, a green filter, and a blue filter are disposed respectively along with their projection lenses. In projecting, CRTs 2A to 2C separately project a red component, a green component, or a blue component of the image data directly on the screen 3. The projected light of a red component, the projected light of a green component, and the projected light of a blue component, which are separately projected by CRTs 2A to 2C, are synthesized to form a single image on the screen 3, so that a moving color image is displayed as a whole.

On the other hand, in a reflection type three-tube projector device 10, as shown in Fig. 2, the device 10 has a box type configuration as a whole, and a projector 11 which has the same composition as the projection type three-tube projector device 1 is arranged within.

Furthermore, a semitransparent screen 12 like a frosted glass is arranged in the front of the reflection type three-tube projector device 10, while a reflector plate 13 is arranged inside the device 10. Thus, the projected lights of red, green, and blue, which are projected by the projector 11, are reflected in a folded manner by the reflector board 13, and then focused on the back-side surface of the screen 12. Therefore, moving color images can be seen on the front surface of the screen 12.

However, as to projector devices 1 and 10 having the above mentioned construction, owing to the fact that the CRTs 2A to 2C are utilized as the light source and that the images projected by those CRTs 2A to 2C are enlarged on the screen 3, 12, it is difficult to display images brightly, additionally, there is a problem that the whole device becomes large.

To solve these problems, a plan of a projector device has been proposed, in which three liquid-crystal panel boards are used in place of CRTs, and a red component, a green component, and a blue component are separately displayed on each of the liquid-crystal panel boards, and at the sametime lights are applied to one side of the liquid-crystal panel boards, and the transmitted lights are separately passed through a red filter, a green filter, and a blue filter, and then focused on the screen. In this case, since the liquid-crystal panel boards are used as the image source, the whole size of this device can be substantially miniaturized compared to that of a device using CRTs. However a liquid-crystal panel board itself has a poor light transmission factor, therefore this plan was insufficient to make the displayed images brighter.

Meanwhile, a proposal has been made wherein a light space modulator is utilized in the display system (Japanese Patent Application Laid Open No. 179781/1985, No. 40693/1991, and No. 174112/1991). In this light space modulator (hereinafter referred to as a mirror reflection type reflective light bulb), microscopic mirror elements are arranged to form a surface, and differences of their reflection are utilized.

If a projector device for projecting color images can be formed utilizing such mirror reflection type reflective light bulb, the construction of the whole device can be simplified and miniaturized, and also it is possible to brighten the displayed images by virtue of the high utilization ratio of the light source.

In view of the foregoing, an object of this invention is to provide a small-size light-weight projector device which is able to display the images brighter.

The foregoing object and other objects of the invention have been achieved by the provision of a projector device for displaying a color image on a image displaying surface by projecting divisional images of each frame, each of which is composed of one of a red component, a green component, or a blue component of image data S20, S21, or S22, on the image displaying surface in a circulative and sequential switching manner, said projector device comprising: a light source 21 for emitting the projection light L1 which is switched among a red light, a green light, and a blue light in a circulative and sequential switching manner; reflector means 26 which has a plurality of reflector elements 57 arranged according to the pixels of the image data, for reflecting the red light, the green light, and the blue light in the first reflective direction which leads the lights to the image displaying surface or in the second reflective direction other than the first reflective direction; and control means 30 for displaying the divisional images, each of which is composed of one of the red component, the green component, and the blue component of the image data, on the image displaying surface, by sequentially switching the reflective directions of the red light, the green light, and the blue light, which are reflected by each of the reflector elements 57, between the first reflective direction and the second reflective direction for each of the reflective elements, based on the image data S20, S21, and S22, in a synchronized manner with the switching motion of the projection light L1 emitted by the light source 21.

In this invention, a mirror reflection type reflective light bulb is used as the reflector means 26, wherein the reflector elements 57 are composed of microscopic mirror elements which are arranged according to each of the pixels of each frame of the image data S20, S21, and S22.

Further in this invention, the light source 21 emits the projection light L1 which is switched to a red light, a green light, and a blue light in a sequential switching manner for each of the frames, and the control means 30 causes each of the reflector elements 57 to switch their reflective directions, based on the image data S20, S21, or S22, so that only the reflector elements 57 corresponding to the pixels of the red component of the image data S20, S21, or S22 reflect the red light in the first reflective direction when the red light is radiated on the reflector means 26, and that only the reflector elements 57 corresponding to the pixels of the blue component of the image data S20, S21, or S22 reflect the blue light in the first reflective direction when the blue light is radiated on the reflector means 26, and that only the reflector elements 57 corresponding to the pixels of the green component of the image data S20, S21, or S22 reflect the green light in the first reflective direction when the green light is radiated on the reflector means 26.

Each of the reflector elements 57 are caused to switch their reflective directions of the red light, the green light, and the blue light between the first reflective direction and the second reflective direction in synchronization with the switching motion of the projection light emitted by the light source 21, for each of the reflector elements 57, based on the image data S20, S21, or S22, hereby divisional images, each of which is composed of one of a red component, a green component, and a blue component of the image data S20, S21, or S22, are displayed on the image displaying surface, thereby the construction of the whole device can be simplified and miniaturized, and the utilization ratio of the light source can be improved.

The nature, principle and utility of the invention will become more apparent from the following detailed description given by way of example only when read in conjunction with the accompanying drawings having like parts designated by like reference numerals or characters, in which:
Fig. 1 is a schematic perspective view showing a conventional projection type projector device;
Fig. 2 is a schematic perspective view showing a conventional reflection type projector device;
Fig. 3 is a schematic perspective view showing a embodiment of the projector device;
Fig. 4 is a schematic plan view showing the arrangement of the optical system in the projector device shown in Fig. 3;
Figs. 5A and 5B are timing charts explaining the switch-timing of colors of the light emitted from the light source and the switch-timing of operations of the mirror elements;
Figs. 6A and 6B are schematic side elevational views explaining the operation of a mirror element;
Fig. 7 is a block diagram showing the synchronous control circuit unit of the projector device shown in Fig. 3; and
Fig. 8 is a schematic plan view showing the situation of the reflection of the light beam by the mirror elements of the mirror reflection type reflective light bulb.

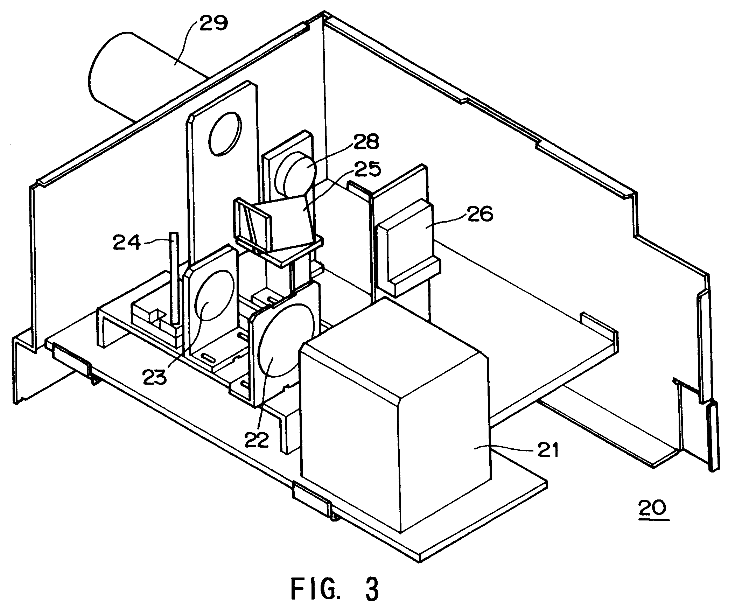

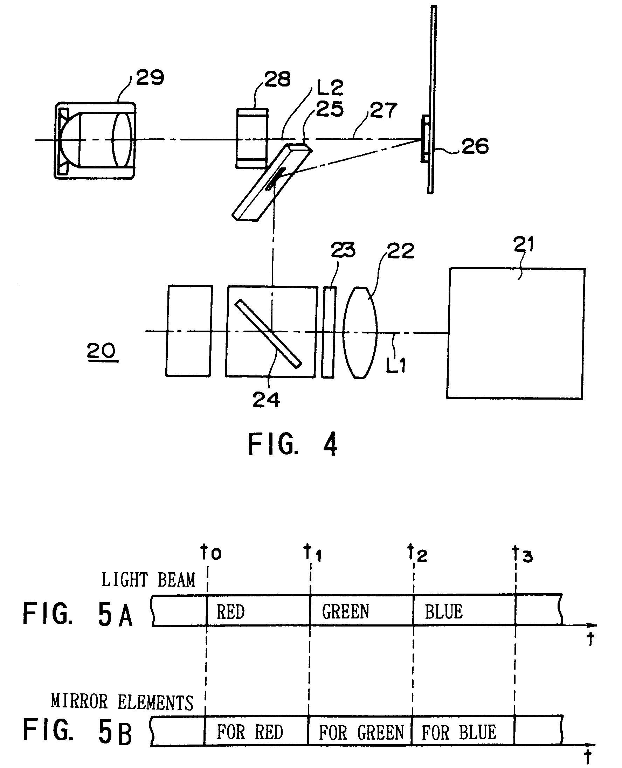

In Figs. 3 and 4, 20 generally shows the projector device. A light source 21 projects a light beam L1 (Fig. 4) which is composed of a red light (time t₀ to time t₁), a green light (time t₁ to time t₂), and a blue light (time t₂ to time t₃) with a circulative and successive scheme as shown in Fig. 5A. The projected light beam L1 is radiated on the reflecting surface (not shown) of a mirror reflection type reflective light bulb 26, via the first and the second condenser lenses 22 and 23 and the first and the second reflecting mirrors 24 and 25.

On the mirror reflection type reflective light bulb 26, the microscopic mirror elements of the size, for instance, about 17 [µm] square are arranged in the same way as the arrangement of pixels of one frame (for instance 768 × 576 pixels) of the image data which is corresponding to VGA (video graphics array), hereby the reflecting surface is formed having approximately the same size as solid state image sensing device which is composed of a 1/2 inch CCD (Charge Coupled Device).

In this case, on the periphery of the reflecting surface of the mirror reflection type reflective light bulb 26, the frame memory (not shown) composed of memory cells is provided, said memory cells are arranged so as to respectively correspond to each of the pixels (and each of the mirror elements) of the image data. Data signals corresponding to the tint of the pixels of the corresponding image data are supplied to each of the memory cells of the frame memory, for each frame, based on the image data.

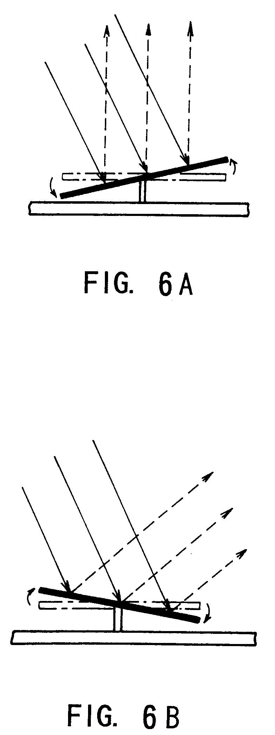

Hereby, when the corresponding memory cell is in the ON state (that is, valid as a pixel), each of the mirror elements inclines by +10° to the stated direction from the neutral state shown with dotted lines in Fig. 6A. Meanwhile, when the corresponding memory cell is in the OFF state (that is, invalid as a pixel), each of the mirror elements inclines by -10° from the neutral state shown with dotted lines, as shown in Fig. 6B, in accordance with the state of each memory cell of the frame memory which is changed according to the above data signal.

Thus, in the mirror reflection type reflective light bulb 26, when the light beam L1 which is radiated on the reflecting surface is a red light, only the mirror elements which are corresponding to the pixels of the red component of the above image data become in the ON state and hence reflect the light beam L1 divisionally in the direction of the light pass 27 (see Fig. 4) (hereinafter referred to as the first reflective direction), based on the supplied image data, as shown in Fig. 5B. When the light beam L1 is a green light, only the mirror elements which are corresponding to the pixels of the green component of the image data become in the ON state and hence reflect the light beam L1 divisionally in the first reflective direction. When the light beam L1 is a blue light, only the mirror elements which are corresponding to the pixels of the blue component of the image data become in the ON state and hence reflect the light beam L1 divisionally in the first reflective direction.

Each reflection light L2 of the light beam L1 which is reflected to the first reflective direction by the mirror reflection type reflective light bulb 26 goes straight along the light pass 27 (Fig. 4), and goes out of the device 20 through the relay lens 28 and the projection lens 29. Then, the projected light beam from the device 20 is focused upon the image displaying surface of the image displaying object such as a screen (not shown).

Thus, the divisional images, each of which is composed of one of the red component, the green component, and the blue component of the image data, is circulatively projected on the image displaying surface successively and sequentially in a short period. Thereby, it is able to cause a viewer recognize as if moving color images are being projected on the surface.

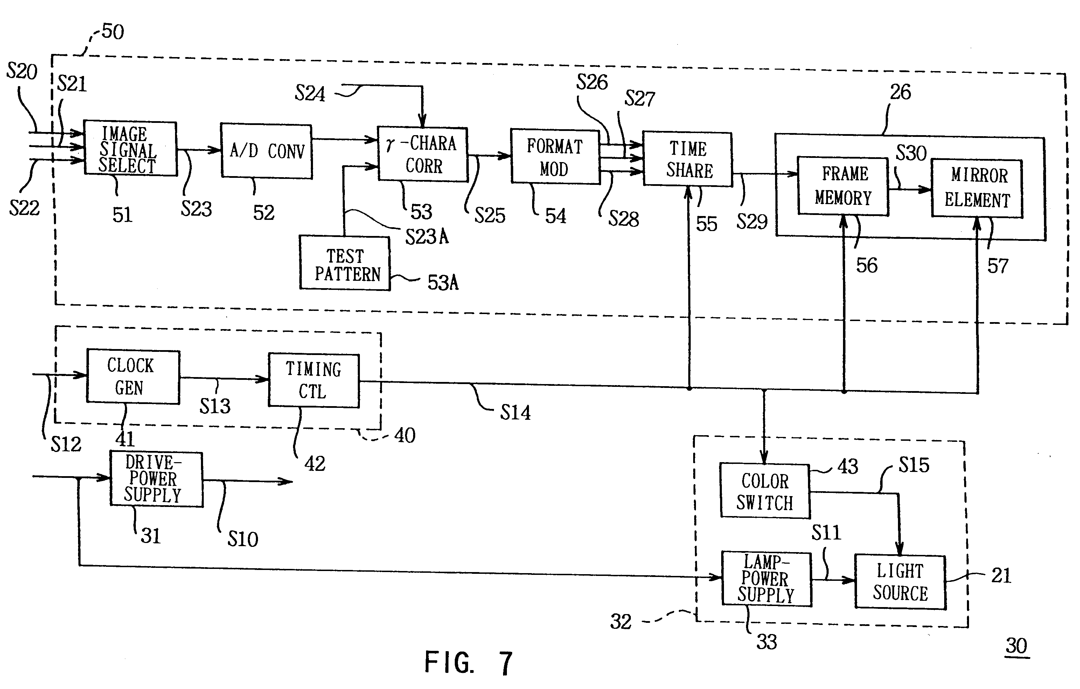

In the projector device 20, in fact, a synchronous control circuit unit 30 as shown in Fig. 7 is used, as the motion control means of mirror elements of the mirror reflection type reflective light bulb 26.

When the power switch (not shown) of the synchronous control circuit unit 30 is turned on, a drive-power supplying circuit 31 sends out a driving signal S10 to each electric system so as to start each electric system. Also, a lamp power supplying circuit 33 of the light source control circuit unit 32 sends out, for instance, power signal S11 to the light source unit 21 so as to cause it to emit the light beam L1.

In a reference clock generating circuit 41, reference clock signal S13 is generated based on supplied phase control signal S12, and this signal is sent to a timing control circuit 42. Then, the timing control circuit 42 sends timing signal S14 which is based on the reference clock signal S13, to a color switching circuit 43 of the light source control circuit unit 32. The color switching circuit 43 sends color switching signal S15 to the light source unit 21 based on the timing signal S14, so that the light beam L1 is switched among a red light, a green light, and a blue light sequentially.

At this time, in the mirror reflection type reflective light bulb control unit 50, an input signal selection circuit 51 chooses the required one signal, out of the supplied three primary colors signal S20, the computer image signal S21, and the computer pattern signal S22 (hereinafter, these are referred to as the image data S20 to S22, collectively). The selected signal is sent to a gamma characteristic correction circuit 53 as image signal S23, via an analog-to-digital converter circuit 52.

Test pattern signal S23A is inputted to the gamma characteristic correction circuit 53 if necessary. The gamma characteristic correction circuit 53 corrects the gamma characteristic of the image signal S23 or the test pattern signal S23A based on the supplied gamma characteristic parameter signal S24, and then sends this to a format modifying circuit 54, as corrected image signal S25.

The format modifying circuit 54 modifies the corrected image signal S25 to the format corresponding to the mirror reflection type reflective light bulb 26. The format modifying circuit 54 then extracts each of the image data of the red component (hereinafter referred to as the red image data), the image data of the green component (hereinafter referred to as the green image data), and the image data of the blue component (hereinafter referred to as the blue image data) from the corrected image signal S25, and then sends these data to a time sharing circuit 55 as the red image data signal S26, the green image data signal S27, and the blue image data signal S28 respectively.

In this situation, the timing signal S14 is being supplied to the time sharing circuit 55 from the timing control circuit 42. The time sharing circuit 55 time-shares the red image data signal S26, the green image data signal S27, and the blue image data signal S28, in a synchronized manner with the switching operation of color of the light beam L1 (Fig. 4) on the light source unit 21, based on the timing signal S14. At the time sharing circuit 55, frame data signal S29 is formed by circulatively and successively arranging the red image data, the green image data, and the blue image data. The frame data signal S29 is then sent to a frame memory circuit 56 of the mirror reflection type reflective light bulb 26.

The frame memory circuit 56 stores the frame data which is based on the frame data signal S29, and sends the stored frame data successively to each mirror element 57 as motion control signal S30 in a synchronized manner with the switching operation of color of the light beam L1 performed on the light source unit 21, according to the timing signal S14 which is supplied from the timing control circuit 42.

In this situation, the timing signal S14 is being supplied to each mirror element 57 from the timing control circuit 42. Hereby, when the light beam L1 which is being projected is a red light, the mirror elements 57 which are corresponding to the pixels of the red component of the image data S20 to S22 are turned to the ON-state. When the light beam L1 is a green light, the mirror elements 57 which are corresponding to the pixels of the green component of the image data S20 to S22 are turned to the ON-state. If the light beam L1 is a blue light, the mirror elements 57 which are corresponding to the pixels of the blue component of the image data S20 to S22 are turned to the ON-state, at the timing which is corresponding to the timing signal S14, based on the motion control signal S30.

In this embodiment, the color switching circuit 43 sends the color switching signal S15 to the light source unit 21, based on the timing signal S14 which is supplied from the timing control circuit 42. Herein, the color switching signal S15 is composed in such a manner that the light beam L1 is switched sequentially to red, green, and blue, once to every three colors for each term in which one frame of the image is displayed on the image displaying surface (hereinafter referred to as one frame display term), so that each color has an equal period.

Meanwhile, the time sharing circuit 55 forms the frame data signal S29 based on the timing signal S14 which is supplied from the timing control circuit 42. Herein, the frame data signal S29 is formed by time-sharing the red image data signal S26, the green image data signal S27, and the blue image data signal S28 so as to place the red image data, the green image data, and the blue image data once to every three colors for each frame display term so that each color has an equal period. This frame data signal S29 is sent to the frame memory circuit 56 of the mirror reflection type reflective light bulb 26.

The frame memory circuit 56 sequentially stores the red image data, the green image data, or the blue image data based on the frame data signal S29. The frame memory circuit 56 also sends the motion control signal S30 which is based on the red image data, the green image data, or the blue image data in the frame memory to each mirror element 57, for each timing on which the content of the frame data signal S29 changes from the red image data to the green image data, from the green image data to the blue image data, or from the blue image data to the red image data, based on the timing signal S14 which is supplied from the timing control circuit 42.

Hereby, in the projector device 20, the red light, the green light, and the blue light are projected on each mirror element 57 successively and sequentially at regular intervals, once to every three-colors for each term in which one frame of the image is displayed. On the other hand, when the red light is being projected on each mirror element 57 only the mirror elements 57 which are corresponding to the pixels of the red component of the image data S20 to S22 reflect the red light in the direction of the light pass 27. When the green light is being projected on each mirror element 57 only the mirror elements 57 which are corresponding to the pixels of the green component of the image data S20 to S22 reflect the green light in the direction of the light pass 27. When the blue light is being projected on each mirror element 57 only the mirror elements 57 which are corresponding to the pixels of the blue component of the image data S20 to S22 reflect the blue light in the direction of the light pass 27. As a result, the divisional images which are composed of the circulatively selected red component, green component, or blue component of the image data S20 to S22 are sequentially displayed on the image displaying surface, for each frame.

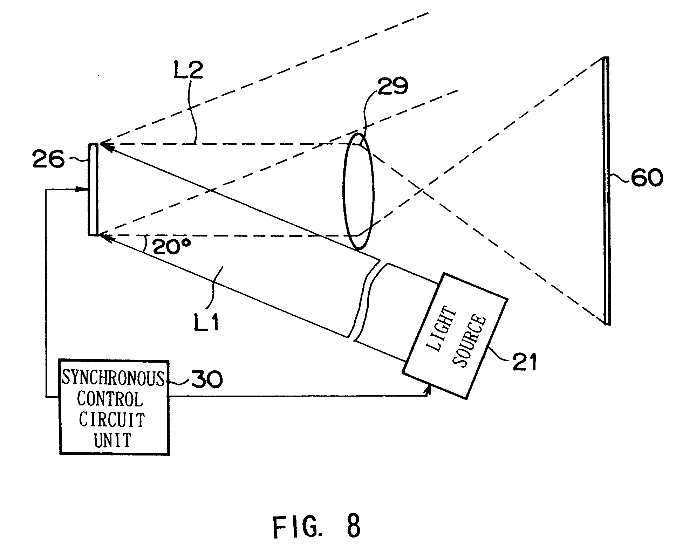

In the case of this embodiment, as shown in Fig. 8, the arrangement of the optical system is set in such a manner that the light beam L1 incidents on the reflecting surface of the mirror reflection type reflective light bulb 26 so that it forms an angle of 20 with the light pass 27.

With the above construction, the light source unit 21 emits this light beam L1 on the reflecting surface of the mirror reflection type reflective light bulb 26, while switching the light beam L1 to the red light, the green light, and the blue light successively in a circulative manner for each picture (frame) of the image which is based on the image data S20 to S22.

As for each mirror element of the mirror reflection type reflective light bulb 26, when the light beam L1 is a red light, the mirror elements which are corresponding to the pixels of the red component of the image data become to the ON-state and hence divisionally reflect the light beam L1 in the direction of the light pass 27. Further, when the light beam L1 is a green light, the mirror elements which are corresponding to the pixels of the green component of the image data is turned to the ON-state and hence divisionally reflect the light beam L1 in the direction of the light pass 27. Furthermore, if the light beam L1 is a blue light the mirror elements which are corresponding to the pixels of the blue component of the image data is turned to the ON-state and hence divisionally reflect the light beam L1 in the direction of the light pass 27 based on the control of the synchronous control circuit unit 30 based on the supplied image signal S23.

Hereby, the divisional pictures composed of the red component, the green component, and the blue component of the image data are displayed on the image displaying surface of the image display object in a successive, sequential, and circulative manner for each frame. As a result, it is able to cause the viewer perceive that the displayed image is one integrated moving image.

According to the above configuration, the light beam L1 is composed of the red light, the green light, and the blue light by arranging them in circulative successive manner at a short period, the above light beam L1 is projected to the reflecting surface of the mirror reflection type reflective light bulb 26, at the same time, each mirror element 57 of the mirror reflection type reflective light bulb 26 is switched to the ON-state or the OFF-state, based on the image data which is supplied to them according to the switch-timing of color of the light beam L1. Thus, a projector device can be formed with a simple construction, and the whole device can be miniaturized, furthermore, the utilization ratio of the light source can be improved. Thus, it is able to realize a small-size light-weight projector device which is able to display images brighter.

In the embodiment described above, the light source unit 21 emits the light beam L1 in the order of red light, green light, and blue light. However, this invention is not only limited to this, but may employ other various orders.

In the embodiments described above, the reflecting surface of the mirror reflection type reflective light bulb 26 is composed of, for instance, 768 × 576 pieces of mirror elements. However, this invention is not only limited to this, but may employ a reflective light bulb having other numbers of mirror elements. Furthermore, other various reflecting means can be applied as the reflecting means for the light beam L1, so long as it can operate as effective as a mirror reflection type reflective light bulb.

In the embodiments described above, this invention is applied to the projection type projector device. However, this invention is not only limited to this, but may be applied to other various projector devices such as a reflection type projector device.

In the embodiments described above, by means of sequentially switching the light beam L1 which is emitted from the light source 21 among a red light, a green light, and a blue light at regular intervals once to every three colors for each period in which one frame is displayed, the sectional pictures which are composed of one of the red component, the green component, and the blue component of the image data S20 to S22 are sequentially displayed once for each frame. However, this invention is not only limited to this, but may adapt other schemes which is pertaining to the sequential switch-timing of the divisional images composed of one of the red component, the green component, and the blue component of the image data S20 to S22 which is to be displayed on the image displaying surface.

As mentioned above, in accordance with the present invention, in a projector device for displaying a color image on a image displaying surface by sequentially projecting the pictures which are composed of one of a red component, a green component, and a blue component of the image data on said image displaying surface; a red light, a green light, and a blue light are sequentially emitted on a reflecting surface with a circulative switching scheme, said reflecting surface is composed of plurality of reflector elements of the reflector means, said reflector elements are arranged in corresponding with pixels of the image data, wherein the reflective directions of each reflector elements are sequentially switched based on the image data in synchronization with the switching of the colors. Thus, a projector device can be formed with a simple construction, and the whole device can be miniaturized. Furthermore the utilization ratio of the light source can be improved, therefore, a small-size light-weight projector device which is able to display images brighter can be realized.

While there has been described in connection with the preferred embodiments of the invention, it will be obvious to those skilled in the art that various changes and modifications may be aimed, therefore, to cover in the appended claims all such changes and modifications as fall within the scope of the invention.

## Claims

1. A projector device for displaying a color image on an image displaying surface, by projecting divisional images of each frame, each image of which is composed of the circulatively selected red component, green component, or blue component of image data, on said image displaying surface in a circulative and sequential switching manner, the device comprising:
a light source (21) for emitting a projection light (L₁) and which in use is switched among a red light, a green light, and a blue light in a circulative and sequential switching manner;
reflector means (26) having a plurality of reflector elements (Fig. 6A,6B) which are arranged according to the pixels of said image data, for reflecting said red light, said green light, and said blue light in a first reflective direction towards said image displaying surface or in a second reflective direction other than said first reflective direction; and
control means (50) for controlling display of said divisional images, each of which is composed of circulatively selected said red component, said green component, or said blue component of said image data on said image displaying surface, by in use sequentially switching the reflective directions of said red light, said green light, and said blue light, which would be reflected by each of said reflector elements, between said first reflective direction and said second reflective direction for each of said reflector elements, based on said image data, in a synchronized manner with said switching of said projection light emitted by said light source (21).

2. The projector device according to claim 1, wherein:
a mirror reflection type reflective light bulb (26) having reflector elements is used as said reflector means (26), wherein said reflectorelements are composed of microscopic mirror elements which are arranged in accordance with each of said pixels of said each frame of said image data.

3. The projector device according to claim 1 or 2 wherein:
said light source (21) in use emits said projection light, which is switched to said red light, said green light, and said blue light in a sequential switching manner, for each of said frames; and
said control means (50) in use controls each of said reflector elements to switch their reflective directions, based on said image data, so that in use only said reflector elements which correspond to the pixels of the red component of said image data reflect said red light in said first reflective direction when said red light is emitted onto said reflector means, and that only said reflector elements which correspond to the pixels of the blue component of said image data reflect said blue light in said first reflective direction when said blue light is emitted onto said reflector means, and that only said reflector elements which correspond to the pixels of the green component of said image data reflect said green light in said first reflective direction when said green light is emitted on to said reflector means.
